(19) Europäisches Patentamt
European Patent Office
Office européen des brevets

(11) **EP 4 523 055 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **23726280.3**

(22) Anmeldetag: **03.05.2023**

(51) Internationale Patentklassifikation (IPC):
**G05D 1/622** (2024.01)    **G06T 15/40** (2011.01)

(52) Gemeinsame Patentklassifikation (CPC):
**G05D 1/0246; G01S 17/86; G01S 17/89; G01S 17/931; G05D 1/0238**

(86) Internationale Anmeldenummer:
**PCT/EP2023/061646**

(87) Internationale Veröffentlichungsnummer:
**WO 2023/217603 (16.11.2023 Gazette 2023/46)**

(54) **VERFAHREN ZUM BESTIMMEN VON PUNKTGRUPPEN, DIE VON EINEM VORGEGEBENEN BETRACHTUNGSPUNKT SICHTBAR ODER NICHT SICHTBAR SIND**

METHOD FOR DETERMINING POINT GROUPS WHICH ARE VISIBLE OR NOT VISIBLE FROM A SPECIFIED VIEWING POINT

PROCÉDÉ DE DÉTERMINATION DE GROUPES DE POINTS VISIBLES OU NON VISIBLES À PARTIR D'UN POINT DE VUE SPÉCIFIÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.05.2022 DE 102022204515**

(43) Veröffentlichungstag der Anmeldung:
**19.03.2025 Patentblatt 2025/12**

(73) Patentinhaber: **Robert Bosch GmbH 70442 Stuttgart (DE)**

(72) Erfinder:
- **BENZ, Stefan 72138 Kirchentellinsfurt (DE)**
- **JUETTE, Christian 30163 Hannover (DE)**

(56) Entgegenhaltungen:
**US-A1- 2019 197 711    US-A1- 2020 018 852**

**Beschreibung**

Die vorliegende Erfindung betrifft ein Verfahren zum Bestimmen einer Zielmenge von Punktgruppen, die von einem vorgegebenen Betrachtungspunkt sichtbar oder nicht sichtbar sind, ein System zur Datenverarbeitung und ein Computerprogramm zu dessen Durchführung sowie ein Gerät zur Verwendung einer solchen Zielmenge von Punktgruppen.

Hintergrund der Erfindung

Geräte wie z.B. sich zumindest teilautomatisiert bewegende Fahrzeuge oder Roboter bewegen sich beispielsweise entlang eines Bewegungspfades in einer Umgebung wie z.B. einer Wohnung, in einem Garten, in einer Fabrikhalle oder auf der Straße, in der Luft oder im Wasser. Hierzu ist es nötig, dass eine aktuelle Position und/oder Orientierung (auch als Pose bezeichnet) des mobilen Geräts bekannt ist und auch immer wieder neu bestimmt wird. Hierzu kann z.B. auf eine Laserentfernungsmessung (z.B. mit sog. Lidar-Sensoren) zurückgegriffen werden. Ebenso kann auf eine Erfassung von Umgebungsinformationen wie Bildern der Umgebung (z.B. mittels Kamera) zurückgegriffen werden. Die US 2019/197711 A1 beschäftigt sich generell mit der Bestimmung von solchen Punkten einer Punktwolke, die von einem anderen Punkt aus sichtbar sind und wendet dies in der Bildbearbeitung an. Die US 2020/018852 A1 beschäftigt sich mit der Navigation von automatisierten Fahrzeugen unter Verwendung von Lidar.

Offenbarung der Erfindung

Erfindungsgemäß werden ein Verfahren zum Bestimmen einer Zielmenge von Punktgruppen, ein System zur Datenverarbeitung und ein Computerprogramm zu dessen Durchführung sowie ein Gerät zur Verwendung einer solchen Zielmenge von Punktgruppen mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit Mengen von Punkten oder einer sog. Punktwolke in einer Umgebung. Solche Punkte bzw. Punktwolken werden z.B. mittels eines Lidar-Sensors oder anderer Art der Entfernungsmessung gewonnen und geben dann jeweils einen Reflexionspunkt z.B. eines Laserstrahls in der Umgebung an, der von dem Lidar-Sensor ausgesendet worden ist. Wenn diese Punkte in einem Koordinatensystem mit dem Lidar-Sensor in dessen Ursprung betrachtet werden, können also z.B. Abstände bzw. Entfernungen von Objekten in der Umgebung anhand der Punkte bzw. deren Koordinaten angegeben werden. Beispielsweise bei Geräten, insbesondere mobilen Geräten wie eingangs erwähnt, kann damit eine Orientierung in der Umgebung und basierend darauf eine (automatisierte) Navigation und insbesondere Bewegung des Geräts in der Umgebung ermöglicht werden.

Eine weitere Möglichkeit bei solchen Geräten ist, Umgebungsinformationen wie Bilder z.B. mittels einer Kamera zu erfassen. Auch solche Bilder, die ggf. auch semantisch analysiert werden können, um bestimmte Objekte darauf zu erkennen, können für die Orientierung in der Umgebung und basierend darauf eine (automatisierte) Bewegung des Geräts in der Umgebung verwendet werden.

Wenn nun beide Arten der Umgebungserfassung, also die erwähnten Punkte bzw. Punktwolke einerseits und Umgebungsinformationen wie Bilder andererseits vorhanden sind, können die Punkte mit den Umgebungsinformationen assoziiert werden, also z.B. die Entfernungen der Punkte auf ein Bild gemappt werden. Es kann z.B. angenommen werden, dass für eine Anwendung Beschriftungen, die durch einen Bildklassifizierungsalgorithmus in einem solchen Bild vorhergesagt wurden, auf Lidar-Punktwolken der gleichen Szene in der Umgebung abgebildet werden sollen, um die semantische Information um 3D-Informationen zu erweitern.

Die Punktwolke einerseits und die Umgebungsinformationen andererseits werden in der Praxis, z.B. bei einem Gerät mit Lidar-Sensor und Kamera, allerdings aus unterschiedlichen Blickwinkeln bzw. von verschiedenen Betrachtungspunkten aus erfasst bzw. aufgenommen. Aufgrund der unterschiedlichen Blickwinkel von Lidar und Kamera ergibt sich damit ein Sichtbarkeitsproblem. Insbesondere an Rändern von Objekten in der Umgebung kann es nämlich vorkommen, dass der Lidar-Sensor z.B. zwei getrennte Punkte in der Umgebung, die weiter als das Objekt entfernt sind sieht bzw. erfasst, die Kamera allerdings nur einen dieser Punkte. Der andere Punkt hingegen ist durch das Objekt verdeckt

Würden also Informationen von der Kamera auf die Lidar-Punktwolke abgebildet bzw. umgekehrt, ohne die Sichtbarkeit der Punkte vom Betrachtungspunkt der Kamera (Kamerastandpunkt) aus zu analysieren, würde der von der Kamera nicht erfasste Punkt fälschlicherweise z.B. mit einer Farbe oder Beschriftung von der Oberseite des Objekts beschriftet werden. Allgemein würde also dieser eigentlich nicht sichtbare Punkt - und damit dessen Entfernung, die größer als diejenige des Objekts ist - auf das Objekt bzw. dessen Oberfläche abgebildet werden.

Das Problem, welche Punkte einer Punktwolke von einem bestimmten Betrachtungspunkt aus sichtbar sind, kann z.B. mit dem "Hidden Point Removal" von S. Katz et al., "ACM Transactions on Graphics", Volume 26, Issue 3, July 2007 pp 24-es, gelöst werden. Dieser Ansatz ist auch von Vechersky et al., "Colourising Point Clouds Using Independent Cameras," in IEEE Robotics and Automation Letters, vol. 3, no. 4, pp. 3575-3582, Oct. 2018, erfolgreich auf die Aufgabe der Kamera-Lidar-Kartierung angewendet.

Der Ansatz von Katz et al. beschreibt einen Operator, mit dem alle Punkte der gegebenen Punktwolke "invertiert" werden. Dies wird auch als "spherical flipping" bezeichnet, da alle Punkte an einer Kugel gespiegelt werden, die alle Punkte enthält (die Transformationsfunktion kann aber auch eine andere sein). Anschließend konstruiert der Ansatz eine konvexe Hülle aus der invertierten Punktwolke und dem Koordinatenzentrum der Kamera. Dort wird gezeigt, dass jeder Punkt, der auf dieser konvexen Hülle liegt, für die Kamera sichtbar ist, alle anderen Punkte sind es nicht und können entfernt werden.

Andere Ansätze zur Lösung des genannten Problems beruhen z.B. auf Oberflächenrekonstruktionen und verwenden dann Methoden des sog. Raycasting oder ähnliches.

In Rahmen der vorliegenden Erfindung wird nun ein Vorgehen vorgeschlagen, um eine Zielmenge von Punktgruppen zu bestimmen, die von einem vorgegebenen Betrachtungspunkt in der Umgebung aus sichtbar oder nicht sichtbar sind, und zwar aus einer (vorhandenen) Menge von Punktgruppen. Eine Punktgruppe kann dabei z.B. nur einen (einzelnen) oder aber auch mehrere Punkte umfassen. Wie später noch näher erläutert wird, können Punktgruppen der Menge voneinander verschieden. Mit anderen Worten können Punkte der Menge gruppiert werden.

Wenngleich das vorgeschlagene Vorgehen nachfolgend insbesondere in Bezug auf das erwähnte Beispiel mit Lidar-Sensor und Kamera, die die Umgebung aus verschiedenen Betrachtungspunkten oder Betrachtungswinkeln aus erfassen (bzw. sehen) beschrieben wird, so lässt sich damit aus einer beliebigen Menge an Punkten bzw. Punktgruppen eine Zielmenge bestimmen, die von einem vorgegebenen Betrachtungspunkt in der Umgebung aus sichtbar (oder eben nicht sichtbar) sind.

Hierzu wird zunächst die Menge von Punktgruppen in der Umgebung bereitgestellt, und zwar mit Koordinaten in einem Ursprungskoordinatensystem. Hierbei können die Punkte der Punktgruppen bzw. die Punktgruppen z.B. in kartesischen oder Kugelkoordinaten vorliegen. Beispielsweise kann die Menge von Punktgruppen in der Umgebung mittels Entfernungsmessung, insbesondere mittels eines Lidar-Sensors, bestimmt werden oder worden sein. Ein Ausgangspunkt der Entfernungsmessung, insbesondere eine Position des Lidar-Sensors, liegt dann insbesondere in einem Ursprung des Ursprungskoordinatensystems.

Die Koordinaten der Menge von Punktgruppen werden dann in Kugelkoordinaten in einem Zielkoordinatensystem transformiert, wobei der Betrachtungspunkt (von dem aus die zu bestimmenden Punkte sichtbar sein sollen, also z.B. der Ort der Kamera) in der Umgebung im Ursprung des Zielkoordinatensystems liegt.

Weiterhin wird ein sphärisch gekrümmtes Gitternetz in Kugelkoordinaten in dem Zielkoordinatensystem bestimmt, wobei das Gitternetz Gitternetzpunkte und/oder Zellen umfasst. Die Gitternetzpunkte und/oder Zellen sind dabei insbesondere gleichmäßig angeordnet. Ein einfaches Beispiel wäre hierfür ein Gitternetz auf einer Kugeloberfläche mit dem Zentrum der zugehörigen Kugel im Ursprung es Zielkoordinatensystems, wobei die Gitternetzlinien in Polarrichtung und Azimutrichtung gleichmäßig voneinander beabstandet sind. Auf diese Weise werden durch vier benachbarte Gitternetzpunkte (dort, wo sich zwei Gitternetzlinien kreuzen) jeweils eine Zelle gebildet, mit den vier Gitternetzpunkten als Ecken. Der hier zugrundeliegende Gedanke ist die Art und Weise, wie Punkte von einem typischen Lidar-Sensor erfasst werden, nämlich mit gleichmäßigen Abständen in Polarrichtung und Azimutrichtung. Würde ein solches Gitternetz für einen Lidar-Sensor in dem Ursprungskoordinatensystem erstellt, würde - je nach Abständen der Gitternetzlinien - jeder Zelle genau ein Punkt bzw. eine Punktgruppe zugeordnet werden können. Eine solche gleichmäßige Anordnung ist insbesondere universell einsetzbar, d.h. für verschiedene Umgebungen. Ebenso ist aber auch eine ungleichmäßige Anordnung der Gitternetzpunkte und/oder Zellen denkbar. Beispielsweise können Zellen bzw. Gitternetzpunkte im Bereich von Boden und/oder Decke (in der Umgebung, z.B. einer Halle) feiner bzw. dichter angeordnet werden als im Rest, da beim Rest typischerweise keine Verdeckungen zu erwarten sind.

Bei dem Gitternetz im Zielkoordinatensystem wird nun jede Punktgruppe (die z.B. jeweils auch nur einen Punkt umfassen können) von zumindest einem Teil der Menge zu einer Zelle oder einem Gitternetzpunkt zugeordnet. Da der Ursprung des Zielkoordinatensystems (der gewünschte Betrachtungspunkt und damit das Zentrum des sphärisch gekrümmten Gitternetzes) nicht mit dem Ursprung des Ursprungskoordinatensystems (in dem z.B. der Lidar-Sensor, mit dem die Punkte der Menge erfasst worden sind, sein kann), übereinstimmt, kann es vorkommen, dass einer Zelle nicht mehr nur genau ein Punkt bzw. eine Punktgruppe zugeordnet werden können; es kann vorkommen, dass mehrere Punkgruppen einer Zelle zugeordnet werden können. Die Zuordnung eines Punktes zu einer Zelle erfolgt dabei anhand der Kugelkoordinaten.

Bildlich würde die Verbindungslinie zwischen dem Ursprung des Ursprungskoordinatensystems und einem bestimmten Punkt genau eine der Zellen schneiden; dieser Zelle kann der Punkte dann zugeordnet werden. Bei mehreren Punkten pro Punktgruppe kann z.B. auch ein Mittelwert der Koordinaten der Punkte verwendet werden. Mehrere Punkte pro Punktgruppe kommen z.B. dann in Betracht, wenn diese mehreren Punkt mit einem Lidar-Sensor zeitgleich oder zeitlich sehr nahe beieinander erfasst worden sind. Da die Zellen durch die Gitternetzpunkte definiert werden oder zumindest werden können, lässt sich eine Punktgruppe anstelle einer Zelle auch einem Gitternetzpunkt zuordnen, z.B. demjenigen, der von dem Schnittpunkt der gedachten Verbindungslinie auf der Kugeloberfläche mit dem Gitternetz am nächsten liegt.

Vor diesem Hintergrund können dann Zellen oder Gitternetzpunkte bestimmt werden, denen mehr als eine Punktgruppe zugeordnet ist. Für jede von zumindest einem Teil dieser Zellen des Gitternetzes bzw. für jeden von zumindest einem Teil dieser Gitternetzpunkte wird dann ein minimaler oder maximaler Abstand vom Ursprung des Zielkoordinatensystems bestimmt (es gibt hierzu dann auch eine entsprechende Punktgruppe). Hierzu kann z.B. für jede Punktgruppe je Zelle bzw. Gitternetzpunkt der Abstand vom Ursprung des Zielkoordinatensystems bestimmt werden. Der Abstand eines Punktes vom Ursprung entspricht dabei der radialen Koordinate in Kugelkoordinaten. Falls eine Punktgruppe mehrere Punkte umfasst, kann ein mittlerer Abstand der mehreren Punkte verwendet werden oder jeweils der minimale bzw. maximale Abstand, der bei den mehreren Punkten der Punktgruppe auftritt.

Basierend darauf kann dann die Zielmenge von Punktgruppen, die von einem vorgegebenen Betrachtungspunkt in der Umgebung aus sichtbar sind, bestimmt werden, und zwar derart, dass diese diejenigen Punktgruppen umfasst, deren Abstand vom Ursprung des Zielkoordinatensystems je Zelle oder Gitternetzpunkt dem minimalen Abstand entspricht oder den minimalen Abstand höchstens um einen vorgegebenen ersten Schwellwert überschreitet, und/oder deren Abstand vom Ursprung des Zielkoordinatensystems je Zelle oder Gitternetzpunkt den maximalen Abstand abzüglich eines vorgegebenen zweiten Schwellwerts unterschreitet. Außerdem können auch diejenigen Punktgruppen, die Zellen oder Gitternetzpunkten zugeordnet sind, denen nur eine Punktgruppe zugeordnet ist, umfasst sein.

Um dies zu erreichen, können z.B. für jede Zelle bzw. jeden Gitternetzpunkt eine oder mehrere Punktgruppen identifiziert werden, deren Abstand vom Ursprung des Zielkoordinatensystems größer als der minimale Abstand ist oder den minimalen Abstand um mehr als einen vorgegebenen ersten Schwellwert überschreitet, und/oder deren Abstand vom Ursprung des Zielkoordinatensystems den maximalen Abstand abzüglich eines vorgegebenen zweiten Schwellwerts überschreitet. Diese können dann aus der Menge entfernt werden, die verbleibenden Punktgruppe der Menge können dann als Zielmenge bereitgestellt werden.

Der Gedanke hierbei ist, dass von dem gewünschten Betrachtungspunkt aus - wenn dort ein Lidar-Sensor wäre - in einer Zelle nur ein Punkt bzw. eine Punktgruppe liegen würde. Wenn hingegen zwei oder mehr Punkte bzw. Punktgruppen einer Zelle zugeordnet sind, die sehr stark unterschiedliche Abstände haben, könnten nicht alle diese Punkte bzw. Punktgruppen von einem Lidar-Sensor erfasst worden sein. Der Punkt mit dem kürzesten Abstand würde durch ein naheliegendes Objekt entstehen, der Punkt mit einem deutlich größeren Abstand würde hinter dem Objekt liegen und könnte gar nicht erfasst werden.

Wenn nun alle Punkte bzw. Punktgruppen, deren Abstand vom Ursprung des Zielkoordinatensystems größer als der minimale Abstand ist, aus der Menge entfernt werden, verbleiben nur noch Punkte bzw. Punktgruppen in der Menge, die auch von dem gewünschten Betrachtungspunkt aus sichtbar sind bzw. wären. Es kann vorgesehen sein, dass nur Punkte bzw. Punktgruppen entfernt werden, deren Abstand vom Ursprung des Zielkoordinatensystems den minimalen Abstand um mehr als einen vorgegebenen ersten Schwellwert überschreitet. Dieser erste Schwellwert kann von dem minimalen Abstand abhängen, insbesondere dem jeweiligen minimalen Abstand multipliziert mit einem jeweiligen Faktor entsprechen. Damit kann der Tatsache Rechnung getragen werden, dass Punkte, die nur einen geringfügig größeren als den minimalen Abstand haben, in der Praxis nicht hinter einem Objekt liegen werden, sondern immer noch auf der Oberfläche des Objekts, die aber z.B. etwas schräg in der Umgebung liegt, sodass dort der Abstand geringfügig größer ist. Durch Wahl des ersten Schwellwerts als Null kann auf diese Weise auch auf (nur) den minimalen Abstand abgestellt werden.

Solche Punkte bzw. Punktgruppen können ebenfalls dadurch identifiziert werden, dass nach Punkten bzw. Punktgruppen gesucht wird, deren Abstand vom Ursprung des Zielkoordinatensystems den maximalen Abstand abzüglich eines vorgegebenen zweiten Schwellwerts überschreitet. Auch damit werden - bei geeigneter Wahl des zweiten Schwellwerts - Punkte bzw. Punktgruppen identifiziert, die vom Betrachtungspunkt aus eigentlich nicht sichtbar sein dürften. Dieser zweite Schwellwert kann von dem maximalen Abstand abhängen, insbesondere dem jeweiligen maximalen Abstand multipliziert mit einem jeweiligen Faktor entsprechen.

Die Zielmenge kann aber ebenfalls dadurch erhalten werden, dass diejenigen Punktgruppen, deren Abstand vom Ursprung des Zielkoordinatensystems je Zelle oder Gitternetzpunkt den minimalen Abstand höchstens um einen vorgegebenen ersten Schwellwert überschreitet (bzw., mit Schwellwert Null, dem minimalen Abstand entspricht), und/oder deren Abstand vom Ursprung des Zielkoordinatensystems je Zelle oder Gitternetzpunkt den maximalen Abstand abzüglich eines vorgegebenen zweiten Schwellwerts unterschreitet, direkt als die Zielmenge ausgegeben werden. Auch diejenigen Punktgruppen, die Zellen oder Gitternetzpunkten zugeordnet sind, denen nur eine Punktgruppe zugeordnet ist, können damit von der Zielmenge umfasst werden, weil dort der einzige Abstand zugleich dem minimalen Abstand entspricht.

Diese identifizierten Punkte bzw. Punktgruppen stellen damit aber auch diejenigen Punkte bzw. Punktgruppen der Menge dar, die von dem vorgegebenen Betrachtungspunkt in der Umgebung aus nicht sichtbar sind. Wenn also für eine bestimmte Anwendung z.B. genau diese Punkte bzw. Punktegruppen gewünscht sind, können diese als die Zielmenge bestimmt werden.

Das vorgeschlagene Vorgehen ist wesentlich schneller als die z.B. eingangs erwähnten Möglichkeiten, da es weder eine Oberflächenrekonstruktion noch eine konvexe Hülle benötigt. Beide Aufgaben sind aufwändig zu berechnen, insbesondere bei größeren Punktwolken. Der oben erwähnte Ansatz zur Schätzung der Sichtbarkeit von Punktwolken hat eine Zeitkomplexität der Ordnung O(n*log n), und ein typischer Ansatz zur Oberflächenrekonstruktion hat eine Zeitkomplexität der Ordnung O(n^2). Das im Rahmen der Erfindung vorgeschlagene Vorgehen hingegen hat nur eine Zeitkomplexität der Ordnung O(n) und liefert dennoch geeignete Ergebnisse, z.B. für den Anwendungsfall mit Lidar-Sensor und Kamera. In der Praxis führt dies zu einer Zeitersparnis von einer Größenordnung.

Außerdem ist das vorgeschlagene Vorgehen einfach und schnell zu implementieren und eignet sich daher als schnelle Lösung für das beschriebene Problem. Es hat sich auch gezeigt, dass der Ansatz von Katz et al. viele Punkte in der Ferne und auf dem Boden herausfiltert, die vom Betrachtungspunkt aus tatsächlich sichtbar sind. Das vorgeschlagene Vorgehen behält diese Punkte bei. Selbst wenn dabei geringfügig mehr False-Positives auftreten sollten, ist dies in der Praxis zu vernachlässigen.

Vorzugsweise umfasst das Bestimmen des Gitternetzes in Kugelkoordinaten in dem Zielkoordinatensystem, dass die Koordinaten der Menge von Punktgruppen in dem Ursprungskoordinatensystem in Kugelkoordinaten bestimmt werden oder ggf. in Kugelkoordinaten verwendet werden (falls die Punkte bzw. Punktgruppen schon so vorliegen sollten). Dann kann eine Häufigkeitsverteilung der Punktgruppen in Polarrichtung bestimmt werden. Basierend auf einer Anzahl lokaler Maxima der Häufigkeitsverteilung kann dann eine Abmessung (als Winkel) der Zellen oder von Abständen (als Winkel) der Gitternetzpunkte in Polarrichtung bestimmt werden. Die Anzahl selbst ergibt dabei eine Abmessung der Zelle entsprechend dem zugrundeliegenden Lidar-Sensor, es kann dann aber auch z.B. das Doppelte oder ein anderer geeigneter Wert gewählt werden. Eine Abmessung (als Winkel) der Zellen oder der Abstände (als Winkel) der Gitternetzpunkte in Azimutrichtung kann basierend einer Anzahl von Punktgruppen je lokalem Maximum bestimmt werden. Die Anzahl selbst ergibt auch hier eine Abmessung der Zelle entsprechend dem zugrundeliegenden Lidar-Sensor, es kann dann aber auch z.B. das Doppelte oder ein anderer geeigneter Wert gewählt werden. Auf diese Weise kann also das Gitternetz selbst auch automatisiert bestimmt werden.

Vorteilhafterweise werden eine Abmessung der Zellen oder Abstände der Gitternetzpunkte in Polarrichtung und/oder eine Abmessung der Zellen oder Abstände der Gitternetzpunkte in Azimutrichtung basierend auf einer Entfernung des vorgegebenen Betrachtungspunktes von einem Ursprung des Ursprungskoordinatensystems bestimmt wird. Je weiter die Sensoren (Lidar-Sensor und Kamera) z.B. auseinanderliegen, desto größer können die Zellen beispielsweise gewählt werden.

Bevorzugt werden auch Umgebungsinformationen, mit Koordinaten in dem Zielkoordinatensystem, z.B. Bildinformationen und/oder semantische Informationen, bereitgestellt. Dann kann zumindest ein Teil der Punktgruppen der Zielmenge von Punktgruppen, die von einem vorgegebenen Betrachtungspunkt in der Umgebung aus sichtbar sind, mit den Umgebungsinformationen assoziiert werden. Mit anderen Worten können also z.B. Punkte mit Entfernungsinformationen auf ein Bild gemappt werden.

Dies erlaubt dann z.B. auch das Bestimmen von Steuerungsinformationen zum Bewegen eines Geräts, basierend auf den Umgebungsinformationen und den damit assoziierten Punktgruppen der Zielmenge. Diese Steuerungsinformationen können dann (für das Gerät) bereitgestellt werden, sodass das Gerät insbesondere basierend auf den Steuerungsinformationen angesteuert werden kann, also z.B. in der Umgebung bewegt wird.

Das vorgeschlagene Vorgehen kann insbesondere immer dann eingesetzt werden, wenn die Sichtbarkeit von Punkten in einer Punktwolke aus einem bestimmten Blickwinkel abgeleitet werden muss. Dies gilt sowohl für künstlich erzeugte Punktwolken (z.B. aus einem CAD-Modell) als auch für aufgenommene reale Daten (z.B. Punktwolken von einem Lidar-Sensor, die in einen anderen Blickwinkel transformiert werden sollen, wie vorstehend schon ausführlich erläutert).

Eine Anwendung für das vorgeschlagene Vorgehen kann die Kombination eines (ggf. anderen) Entfernungssensors (z.B. Lidar oder Radar) und eines (ggf. anderen) bildbasierten Sensors (z.B. Kamera oder Wärmebildgerät) sein. Das vorgeschlagene Vorgehen kann in solchen Systemen eingesetzt werden, um die Datenqualität zu verbessern, indem die beiden Datenquellen aufeinander abgestimmt werden. Dadurch können viele weitere Algorithmen von der verbesserten Datenqualität und -quantität profitieren (da die Daten nun nicht nur Bild-/Semantik- oder 3D-Informationen enthalten, sondern beides).

Das vorgeschlagene Vorgehen kann allgemein verwendet werden, um den Standpunkt einer Punktwolkenquelle "korrekt" zu transformieren, d.h. mit Sichtbarkeitsbeschränkungen und nicht nur mit einer Verzerrung des Referenzrahmens. Das vorgeschlagene Vorgehen kann auch für die Fusion mehrerer Punktwolkenquellen (Lidar, Radar, Stereovision, strukturiertes Licht) zu einer Punktwolke aus einem beliebigen (virtuellen) Blickwinkel verwendet werden.

Das vorgeschlagene Vorgehen kann z.B. auch verwendet werden, um einen virtuellen (Lidar-)Sensor zu simulieren, zum Beispiel in synthetischen Umgebungen oder auf realen Daten. Eine spezielle Anwendung des vorgeschlagenen Vorgehens ist die Erkennung von Kisten und anderen Objekten z.B. in Lagerumgebungen unter Verwendung eines Lidar- und eines Kamerasensors. Zu diesem Zweck kann mit dem vorgeschlagenen Vorgehen die Zuordnung von RGB-Daten von einer Kamera und semantischen Etiketten dieser Kamerabilder zu einer Lidar-Punktwolke verbessert werden. Die Punktwolke könnte dann akkumuliert und Objekte darin erkannt werden. Das vorgeschlagene Vorgehen kann zum Beispiel auch im Rahmen des autonomen Fahrens eingesetzt werden, wenn Informationen von einem Lidar-Sensor oder Radar-Sensor und einer oder mehreren Kameras kombiniert werden oder werden sollen.

Ein erfindungsgemäßes System zur Datenverarbeitung umfasst Mittel zur Ausführung des erfindungsgemäßen Verfahrens bzw. von dessen Verfahrensschritten. Es kann sich bei dem System um einen Computer oder Server handeln, z.B. in einer sog. Cloud oder Cloud-Umgebung. Dorthin können dann - im Falle der Anwendung für ein (mobiles) Gerät - die Menge der Punktgruppen übermittelt werden (z.B. über eine drahtlose Datenverbindung), und die Zielmenge kann dann wieder zurück an das Gerät übermittelt werden. Denkbar ist an sich auch, dass ein solches System zur Datenverarbeitung ein Computer oder ein Steuergerät in einem solchen (mobilen) Gerät ist.

Die Erfindung betrifft auch ein Gerät, das eingerichtet ist, eine Menge von Punktgruppen in einer Umgebung, mit Koordinaten in einem Ursprungskoordinatensystem, bereitzustellen, und bevorzugt auch Umgebungsinformationen mit Koordinaten in einem Zielkoordinatensystem bereitzustellen. Das Gerät ist weiter eingerichtet, eine Zielmenge von Punktgruppen, die von einem vorgegebenen Betrachtungspunkt in der Umgebung aus sichtbar oder nicht sichtbar sind, die gemäß einem erfindungsgemäßen Verfahren aus der Menge von Punkten bestimmt worden ist, zu erhalten. Bevorzugt weist das Gerät einen Entfernungsmessungs- oder Lidar-Sensor zum Erfassen der Punktgruppen in der Umgebung auf, weiter bevorzugt auch einen Sensor, insbesondere Bildsensor, zum Erfassen von Umgebungsinformationen, weiter bevorzugt auch eine Steuer- und/oder Regeleinheit und eine Antriebseinheit zum Bewegen des Geräts. Auch das System zur Datenverarbeitung kann, wie erwähnt, von dem Gerät umfasst sein.

Das Gerät ist vorzugsweise als sich zumindest teilweise automatisiert bewegendes Fahrzeug, insbesondere als Personenbeförderungsfahrzeug oder als Güterbeförderungsfahrzeug, und/oder als Roboter, insbesondere als Haushaltsroboter, z.B. Saug- und/oder Wischroboter, Boden- oder Straßenreinigungsgerät oder Rasenmähroboter, und/oder als Drohne ausgebildet.

Auch die Implementierung eines erfindungsgemäßen Verfahrens in Form eines Computerprogramms oder Computerprogrammprodukts mit Befehlen bzw. Programmcode zur Durchführung des Verfahrens bzw. der Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1     zeigt schematisch ein Gerät in einer Umgebung zur Erläuterung der Erfindung.

Figur 2     zeigt die Umgebung aus Figur 1 mit weiteren Details.

Figur 3     zeigt ein Gitternetz zur Erläuterung der Erfindung.

Figur 4     zeigt verschiedene Abstände von Punkten.

Figur 5     zeigt einen Ablauf eines erfindungsgemäßen Verfahrens in einer bevorzugten Ausführungsform.

Figur 6     zeigt Darstellungen für vor und nach der Anwendung eines erfindungsgemäßen Verfahrens in einer bevorzugten Ausführungsform.

Ausführungsform(en) der Erfindung

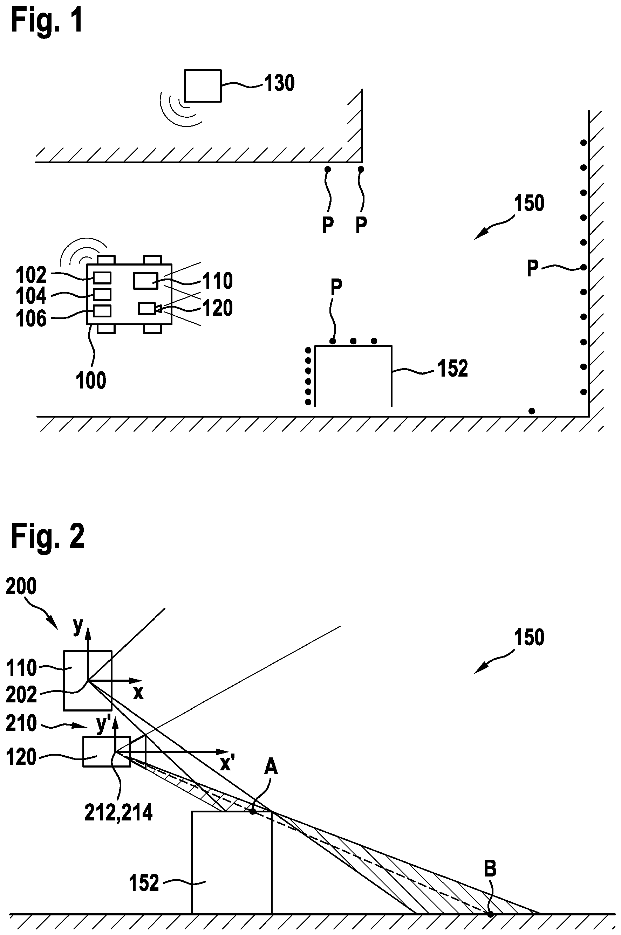

In Figur 1 ist schematisch ein Gerät 100 in einer Umgebung 150 dargestellt, anhand dessen die Erfindung erläutert werden soll. Bei dem Gerät 100 handelt es sich z.B. um einen Roboter oder ein automatisiert (bzw. autonom) fahrendes Fahrzeug, mit einer Antriebseinheit 102, einer Steuer- und/oder Regeleinheit 106 sowie einer Kommunikations- und Recheneinheit 106, über das eine drahtlose Datenverbindung mit einem System zur Datenverarbeitung 130, z.B. einem Server, möglich ist. Außerdem weist das Gerät 100 einen Lidar-Sensor 110 zur Laserentfernungsmessung sowie eine Kamera 120 zur Erfassung von Bildern der Umgebung 150 auf. Bei dem Gerät 100 kann es sich insbesondere um ein erfindungsgemäßes Gerät in einer bevorzugten Ausführungsform handeln.

Bei der Umgebung 150 handelt es sich beispielhaft um das Innere eines Gebäudes, z.B. um einen Flur mit Seitenwänden. An einer Seitenwand ist beispielhaft ein Objekt 152 oder Hindernis gezeigt. Es kann z.B. vorgesehen sein, dass mittels des Lidar-Sensors 110 und der Kamera 120 Informationen (Entfernungs- und Bildinformationen) der Umgebung 150 erfasst werden sollen, basierend worauf das Gerät 100 dann in der Umgebung 150 bewegt werden soll. Beispielsweise kann vorgesehen sein, dass das Gerät 100 den Flur entlangfahren soll, dabei aber um das Objekt 152 herumfahren sollte.

Hierzu kann mittels des Lidar-Sensors 110 die Umgebung 150 abgescannt werden. Dabei wird der Laserscanner im Lidar-Sensor bewegt, während mittels ausgesendeter Laserstrahlen und empfangener, reflektierter Strahlung eine Vielzahl bzw. eine Menge an Punkten P erhalten wird; jeder Punkt steht dabei für einen Punkt oder eine kleine Fläche in der Umgebung, dort z.B. an einem Objekt, von dem eine reflektierte Strahlung empfangen wird.

In Figur 2 ist die Umgebung 150 aus Figur 1 erneut dargestellt. Von dem Gerät sind nur der Lidar-Sensor 110 und die Kamera 120 gezeigt. Dabei ist insbesondere zu sehen, dass der Lidar-Sensor 110 und die Kamera 120 räumlich voneinander getrennt sind und damit auch verschiedene Betrachtungspunkte bzw. Betrachtungswinkel für die Umgebung 150 haben. Wenngleich hier die Situation nur zweidimensional dargestellt ist, so können der Lidar-Sensor 110 und die Kamera 120 auch in der dritten Dimension einen Abstand voneinander aufweisen, müssen dies jedoch nicht. Außerdem sind von der Menge an Punkten P aus Figur 1 beispielhaft zwei Punkte A und B ausgewählt und dargestellt.

Anhand der Figur 2 ist ersichtlich, dass der Lidar-Sensor 110 sowohl den Punkt A als auch den Punkt B sehen bzw. erfassen kann. Die Kamera 120 hingegen kann aufgrund ihres anderen Blickwinkels bzw. Betrachtungspunktes 214 jedoch nur den Punkt A sehen bzw. erfassen. Würden also Informationen von der Kamera auf die Lidar-Punktwolke (die Menge der Punkte **P,** die auch A und B umfassen) abgebildet bzw. umgekehrt, ohne die Sichtbarkeit der Punkte vom Betrachtungspunkt der Kamera 120 (Kamerastandpunkt) aus zu analysieren, würde der Punkt B fälschlicherweise z.B. mit einer Farbe oder Beschriftung von der Oberseite des Objekts 152 beschriftet werden oder allgemein mit einer Oberseite bzw. Oberfläche des Objekts 152 assoziiert werden.

Die Punkte P (umfassend auch A und B) können mit Koordinaten in einem Koordinatensystem 200 des Lidar-Sensors 110 mit dem Lidar-Sensor 110 im Ursprung 202 dieses Koordinatensystems vorliegen bzw. dargestellt sein. Beispielhaft ist das Koordinatensystem 200 als kartesisches Koordinatensystem mit den Achsen x und y gezeigt. Eine Achse z wäre hier senkrecht zur Zeichenebene und ist nicht zu sehen. Auf diese Weise kann jeder Punkt genau definiert werden. Wäre das Koordinatensystem 200 eines mit Kugelkoordinaten, würden z.B. die Entfernungen der Punkte vom Ursprung 202 der Betrag der Radialkoordinate entsprechen.

Auch für die Kamera 120 kann ein Koordinatensystem 210 festgelegt werden, mit der Kamera 120 im Ursprung 212 dieses Koordinatensystems 210. Beispielhaft ist das Koordinatensystem 210 als kartesisches Koordinatensystem mit den Achsen x' und y' gezeigt. Eine Achse z' wäre hier senkrecht zur Zeichenebene und ist nicht zu sehen.

Um nun aus der Menge an Punkten P (umfassend die Punkte A und B) eine Zielmenge an Punkten zu bestimmen, die von der Kamera 120 aus, also von einem vorgegebenen Betrachtungspunkt in der Umgebung - dem Ursprung des Koordinatensystems 210 - aus sichtbar sind, kann das nachfolgend beispielhaft beschriebene Vorgehen verwendet werden. Diese Zielmenge wird dann weiterhin den Punkt A, nicht aber den Punkt B umfassen.

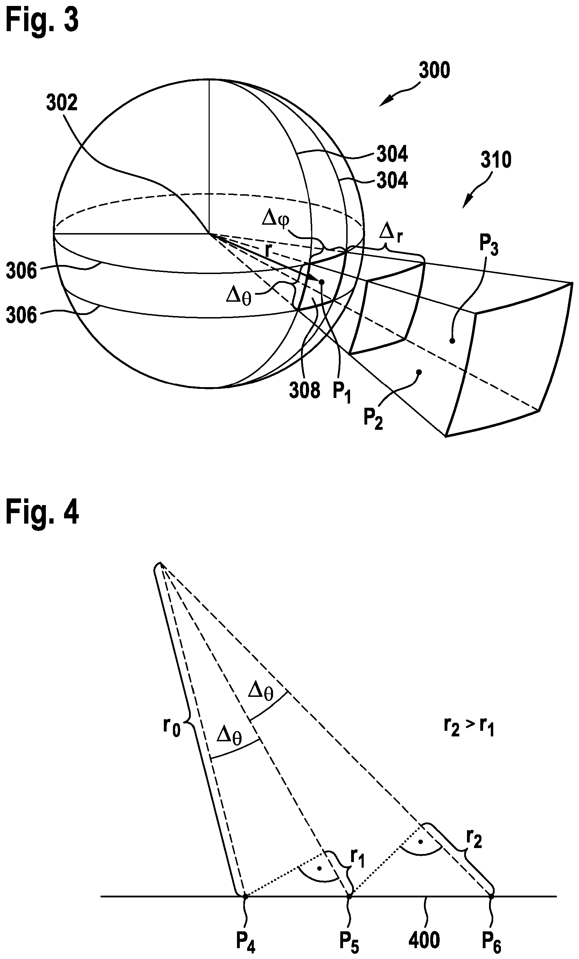

Für das vorgeschlagene Vorgehen kann das typische Abschattungsverhalten eines Lidar-Sensors betrachtet werden. Ein 3D-Lidar-Sensor tastet seine Umgebung in einem diskretisierten Winkelmuster ab, sowohl in horizontaler (azimutaler) als auch in vertikaler (polarer) Richtung. Für jeden diskretisierten Punkt - wie z.B. die Punkte P in Figur 1 - wird immer die Entfernung zur nächstgelegenen reflektierenden Oberfläche gemessen. Aufgrund der Diskretisierung wird innerhalb eines bestimmten azimutalen und vertikalen bzw. polaren Abstands von einem Punkt kein anderer Punkt erkannt. Dies bedeutet bildlich, dass der erkannte Punkt einen pyramidenförmigen Schatten auf alle anderen Punkte hinter ihm wirft, wie in Figur 3 zu sehen und später noch erläutert wird.

Dieses Verhalten eines Lidar-Sensors soll nun für einen anderen Blickwinkel bzw. einen Betrachtungspunkt nachgebildet werden. Zur Veranschaulichung wird der Algorithmus am Beispiel der Umwandlung von Lidar-Daten in ein Kamerabild erläutert, wie vorstehend erwähnt. Es sei aber nochmals erwähnt, dass dies eine **Transformation** von einem Koordinatensystem - ein Ursprungskoordinatensystem wie das Koordinatensystem 200 in Figur 2 - in ein beliebiges anderes Koordinatensystem - ein Zielkoordinatensystem wie das Koordinatensystem 210 in Figur 1 - im Allgemeinen sein kann und nicht auf den Anwendungsfall Lidar-Kamera beschränkt ist. Dies dient nur zur Erläuterung.

Zu diesem Zweck kann zunächst eine Menge von Punkten bzw. eine Punktwolke $_L P$ betrachtet werden, die von einem Lidar-Sensor im Koordinatensystem $(CS)_L$ (entspricht z.B. dem Koordinatensystem 200) stammt, in das Kamerakoordinatensystem $(CS)_C$ (entspricht z.B. dem Koordinatensystem 210) transformiert werden, und zwar durch eine Transformation

$$_C P = T_{CL}\,_L P$$

wobei

$$T_{CL} = \begin{pmatrix} R_{CL} & t_{CL} \\ 0^T & 1 \end{pmatrix}$$

durch eine extrinsische Kalibration gegeben sein kann. Nach dieser Transformation können dann alle Punkte P = (x', y', z') in $_CP$ durch die folgenden Gleichungen in Kugelkoordinaten $\hat{P}$ = (r, θ, φ) umgewandelt bzw. transformiert werden. Hierzu sei erwähnt, dass dabei typische Roboterkoordinatenorientierungen mit x für vorwärts, y für links und z für oben angenommen werden.

Diese Transformation von kartesischen in Kugelkoordinaten erfolgt z.B. gemäß

$$r = \sqrt{(x'^2 + y'^2 + z'^2}$$

$$\varphi = \arctan(\frac{z'}{r})$$

$$\theta = \arctan(\frac{y'}{x'})$$

Wenn die Punkte im Ursprungskoordinatensystem bereits in Kugelkoordinaten vorliegen sollten, ist nur die Transformation in das Zielkoordinatensystem nötig.

Weiterhin wird im Zielkoordinatensystem ein sphärisch gekrümmtes bzw. ein sphärisches Gitternetz G mit Zellen $G_{ij}$ einer bestimmten Dimension (Abmessung) $\Delta\theta \times \Delta\varphi$ in Polarrichtung bzw. Azimutrichtung bestimmt. Ein solches Gitternetz 310 mit Zellen 308 ist in Figur 3 in einem Koordinatensystem mit Ursprung 302 und in Kugelkoordinaten dargestellt. Jede Zelle wird hier z.B. durch zwei Gitternetzlinien 304, die in Polarrichtung verlaufen, und zwei Gitternetzlinien 306, die in Azimutrichtung verlaufen, definiert. Dabei soll z.B. gelten:

$$0 \le i \le \frac{360°}{\Delta\varphi}, i \in \mathbb{N}_0$$

$$0 \le j \le \frac{180°}{\Delta\theta}, j \in \mathbb{N}_0.$$

Anschließend wird jeder Punkt $\hat{P}$ einer dieser Zellen zugewiesen, indem z.B. seine Koordinaten bestimmt werden gemäß:

$$i_{\hat{P}} = \left\lfloor \frac{\varphi_{\hat{P}}}{\Delta\varphi} \right\rfloor,$$

$$j_{\hat{P}} = \left\lfloor \frac{\theta_{\hat{P}}}{\Delta\theta} \right\rfloor.$$

Dabei ist zu beachten, dass eine Zelle einen ganzen Kegelstumpf im 3D-Raum beschreibt, wie in Figur 3 angedeuteten.

Wie erwähnt, kann es dann Zellen geben, denen kein Punkt zugewiesen ist, Zellen, denen genau ein Punkt zugewiesen ist, sowie Zellen, denen mehr als ein Punkt zugewiesen ist. In dem Beispiel in Figur 3 sind der Zelle 308 z.B. drei Punkte $P_1$, $P_2$ und $P_3$ zugewiesen. Für jede Zelle mit mehreren Punkten kann der Punkt mit dem geringsten bzw. minimalen Abstand zum Koordinatenursprung, hier Ursprung 302, bestimmt werden, indem z.B. die jeweiligen Werte für die radiale Koordinate (r -Koordinatenkomponente) verglichen werden. Das minimale bzw. kleinste r bzw. der minimale Abstand für eine Zelle kann z.B. als $r_0$ bezeichnet werden.

Weiterhin können dann alle Punkte der Zelle mit einem Abstand, der den minimalen Abstand $r_0$ um mehr als einen vorgegebenen ersten Schwellwert $\Delta r$ überschreitet, für die also

$$r > r_0 + \Delta r$$

gilt, identifiziert und aus der gesamten, ursprünglichen Menge an Punkten entfernt werden. Dabei kann

$$\Delta r = \alpha_r \cdot r_0$$

gelten. Ein Grund für einen solchen (ersten) Schwellwert $\Delta r$ ist z.B. praktischer Natur. Aufgrund des unterschiedlichen Blickwinkels zwischen Kamera und Lidar kann eine Zelle auch mehrere Punkte enthalten, die auf einer nahen Fläche nebeneinanderliegen. Diese sollen z.B. nicht entfernt werden, sondern es sollen nur diejenigen entfernt werden, die deutlich weiter entfernt sind.

Eine Methode zur Bestimmung von $\Delta r$ durch Multiplikation mit einem Faktor $\alpha_r$ ergibt sich z.B. ebenfalls aus praktischen Überlegungen; dies ist in Figur 4 veranschaulicht. Für Punkte, die in Ebenen wie Ebene 400 liegen, die orthogonal zur Bildebene sind, nimmt die Differenz zwischen den r-Koordinaten der Punkte, hier Punkte $P_4$, Ps, $P_6$, mit festem $\Delta\theta$-Versatz zu, je weiter diese Punkte entfernt sind. Diese Differenzen relativ zum minimalen Abstand $r_0$ sind mit $r_1$ bzw. $r_2$ bezeichnet. Aus diesem Grund sollte $\Delta r$ multiplikativ bestimmt werden, um nicht fälschlicherweise Punkte zu entfernen, die auf denselben Ebenen liegen.

Je nach Anwendung könnte der (erste) Schwellwert $\Delta r$ aber auch mit anderen Funktionen bestimmt werden, z.B. als Exponentialfunktion oder als Konstante.

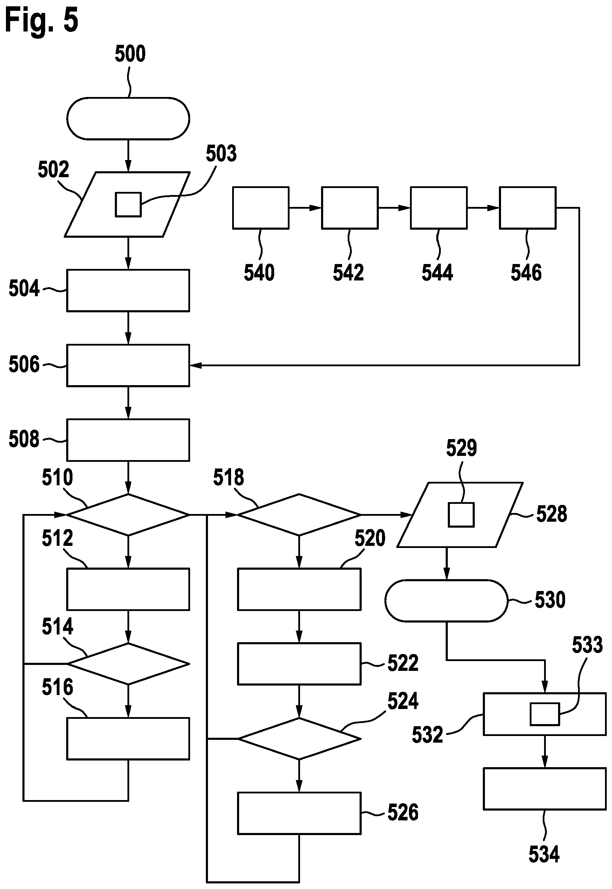

**In Figur** 5 ist beispielhaft ein erfindungsgemäßes Verfahren in einer bevorzugten Ausführungsform als Flussdiagramm veranschaulicht. Nach einem Start 500 wird, in Schritt 502, eine Menge 503 an Punkten (oder allgemein Punktgruppen) bereitgestellt. Die Eingabe für den beschriebenen Algorithmus umfasst neben der Menge von Punkten bzw. einer Punktwolke $_LP$, die z.B. von einem Lidar- (oder einem anderen) Sensor erfasst bzw. aufgenommen wurde, auch eine extrinsische Transformation $T_{CL}$ in ein anderes Koordinatensystem mit anderem Ursprung (z. B. das einer Kamera). Der Algorithmus zielt dann darauf ab, die Punktwolke so zu verändern, dass, wenn die Punktwolke von einem anderen Standpunkt bzw. Betrachtungspunkt aus betrachtet würde, Punkte, die hinter Objekten in der ursprünglichen Szene liegen würden, entfernt werden.

Es wird hierzu dann, in einem Schritt 504, die Menge an Punkten bzw. die Punktwolke $_L P$ mit Hilfe der Transformation $T_{CL}$ vom Ursprungs- bzw. Lidar-Sensorkoordinatensystem in das interessierende Zielkoordinatensystem transformiert, wodurch sich die transformierte Punktwolke $_C P$ ergibt, und zwar in Kugelkoordinaten, d.h. für jeden Punkt gibt es Koordinaten der Form $\hat{P} = (r, \theta, \varphi)$. Die Transformation ergibt typischerweise nicht direkt die Kugelkoordinaten, sondern die Umrechnung in Kugelkoordinaten muss ggf. noch separat erfolgen. Diese Menge von Punkten in Kugelkoordinaten kann auch als $_C \hat{P}$ bezeichnet werden.

In einem Schritt 506 wird ein sphärisch gekrümmtes Gitternetz in Kugelkoordinaten bestimmt, wie in Bezug auf Figur 3 erläutert. Dabei kann zudem insbesondere ein sog. "r -Puffer" initialisiert werden, in dem (später) für jede Zelle der Punkt mit dem minimalen Abstand gespeichert werden kann. Für jede Zelle kann dieser Wert des "r -Puffers" zunächst z.B. auf unendlich initialisiert werden.

In einem Schritt 508 wird jeder Punkt einer Zelle zugeordnet. Dabei kann zugleich auch der Punkt mit minimalen Abstand vom Ursprung des Zielkoordinatensystems für diese Zelle bestimmt werden.

**Dies kann** in einer Art Schleife erfolgen, sodass z.B. in einem Schritt 510 immer geprüft wird, ob der Punkt für den gerade eine Zuordnung zu einer Zelle erfolgt ist, der letzte der Menge $_C \hat{P}$ war. Falls nicht, wird in Schritt 512 ein Gitterindex *(i,j)*, wie vorstehend erwähnt, bestimmt, d.h. es wird diejenige Zelle bestimmt, der der Punkt zuzuordnen ist. Für jeden Punkt kann also der entsprechende Gitterindex auf der Grundlage seiner sphärischen Koordinaten berechnet werden. Der dem Punkt entsprechende Gitterindex (z B. durch einen Punktindex gekennzeichnet) wird zur späteren Verwendung gespeichert.

In Schritt 514 kann dann geprüft werden, ob der Wert des " r -Puffers" dieser Zelle größer ist als der Wert der r -Koordinate des aktuellen Punktes. Falls ja, heißt dies, dass der aktuelle Punkt einen geringeren Abstand als ein anderer Punkt, der dieser Zelle zugeordnet ist, hat. Dann wird, in Schritt 516, der Wert des "r -Puffers" dieser Zelle mit dem Wert der r -Koordinate des aktuellen Punktes ersetzt.

Auf diese Weise werden also alle Punkte einer Zelle zugeordnet und für jede Zelle wird zugleich der Punkt mit minimalem Abstand oder zumindest der Wert dieses minimalen Abstands bestimmt.

Wenn bei der Schleife in Schritt 510 festgestellt wird, dass der Punkt für den gerade eine Zuordnung zu einer Zelle erfolgt ist, der letzte der Menge $_C \hat{P}$ war, werden für alle diejenigen Zellen, denen mehr als ein Punkt zugeordnet ist, bestimmte Punkte identifiziert, die aus der Menge entfernt werden können.

Auch dies kann wieder in einer Art Schleife erfolgen, sodass z.B. in einem Schritt 518 immer geprüft wird, ob der Punkt für den gerade eine Prüfung durchgeführt worden ist, der letzte der Menge $_C \hat{P}$ war. Falls nicht, wird in Schritt 520 z.B. für den aktuellen Punkt dessen Gitterindex geprüft, d.h. es wird geprüft, welcher Zelle er zugeordnet ist. In einem Schritt 522 kann dann z.B. der Wert des "r -Puffers" dieser Zelle geladen werden (dieser wurde in der vorherigen Schleife bestimmt). Dieser Wert entspricht dem minimalen Abstand $r_0$.

In einem Schritt 524 wird dann geprüft, ob der Abstand, d.h. der Wert der r -Koordinate des aktuellen Punktes, kleiner oder gleich dem minimalen Abstand zuzüglich des erwähnten (ersten) Schwellwerts ist, d.h. ob gilt:

$$r(\hat{P}) \leq r_0 + \Delta r$$

**Falls dem** so ist, wird der Punkt, in Schritt 526, einer Zielmenge $_C \tilde{P}$ zugeordnet. Falls dem nicht so ist, wird nichts gemacht, der betreffende Punkt wird also nicht weiter berücksichtigt.

Wenn bei der Schleife in Schritt 518 festgestellt wird, dass der Punkt für den gerade eine Prüfung erfolgt ist, der letzte der Menge $_C \hat{P}$ war, kann die dabei entstandene Zielmenge $_C \tilde{P}$ bzw. 529 in einem Schritt 528 ausgegeben bzw. bereitgestellt werden, das Verfahren kann in Schritt 530 enden.

Es sei erwähnt, dass anstelle einer Prüfung in Schritt 524, ob der Abstand, d.h. der Wert der r -Koordinate des aktuellen Punktes, kleiner oder gleich dem minimalen Abstand zuzüglich des erwähnten (ersten) Schwellwerts ist, ebenso geprüft werden kann, ob der Wert der r -Koordinate des aktuellen Punktes, größer als der minimale Abstand zuzüglich des erwähnten (ersten) Schwellwerts ist, d.h. d.h. ob gilt:

$$r(\hat{P}) > r_0 + \Delta r$$

In diesem Fall würde, falls dem so ist, der Punkt, in einem alternativen Schritt 526, aus der Menge $_C \hat{P}$ entfernt. Falls dem nicht so ist, wird nichts gemacht, der betreffende Punkt bleibt also in Menge $_C \hat{P}$. Die dabei verbleibende Menge $_C \hat{P}$ kann dann in einem alternativen Schritt 528 als Zielmenge $_C \tilde{P}$ ausgegeben bzw. bereitgestellt werden.

Weiterhin ist es bevorzugt, wenn, in einem Schritt 532, Umgebungsinformationen 533 wie z.B. Bildinformationen oder Bilder, mit Koordinaten in dem Zielkoordinatensystem, bereitgestellt werden. In einem Schritt 534 können dann die Punkte der Zielmenge, die von einem vorgegebenen Betrachtungspunkt in der Umgebung aus sichtbar, mit den Umgebungsinformationen assoziiert werden.

Außerdem können im Rahmen eines erfindungsgemäßen Verfahrens in einer bevorzugten Ausführungsform auch die für das Gitternetz benötigten Parameter $\Delta\varphi$ und $\Delta\theta$ (Abstände) automatisch aus der gegebenen Menge an Punkten bzw. der Punktwolke $_LP$ abgeleitet bzw. bestimmt werden. Dabei kann z.B. davon ausgegangen werden, dass die Punktwolke von einem typischen Laserscanner (Lidar-Sensor) stammt, der charakteristische Ringe um die vertikale Achse aufweist.

Hierzu werden, in einem Schritt 540, Koordinaten der Menge von Punkten, d.h. Punkte in $_LP$, in dem Ursprungskoordinatensystem in Kugelkoordinaten bestimmt, wenn diese nicht schon so vorliegen.

In einem Schritt 542 wird dann eine Häufigkeitsverteilung der Punkte in Polrichtung bestimmt, also ein $\theta$-Histogramm erstellt. Dazu können die $\theta$-Koordinaten aller Punkte zunächst mit einer gewissen Genauigkeit gebinnt werden, z.B. $2^{16}$ Bins. Das Histogramm (Häufigkeitsverteilung) enthält dann für jeden Laserring Peaks von annähernd gleicher Höhe. Diese Spitzen können gezählt werden, indem das Histogramm zunächst z.B. mit einem Schwellenwert versehen wird, um Rauschen zu entfernen, und dann lokale Maxima gefunden und gezählt werden.

In einem Schritt 544 wird dann z.B. eine Abmessung (Winkel) der Zellen in Polrichtung basierend auf der Anzahl lokaler Maxima der Häufigkeitsverteilung bestimmt. Der Wert für den Abstand, $\Delta\theta$, kann gemäß

$$\Delta\theta = \frac{180°}{N}$$

bestimmt werden, wobei N die Anzahl lokaler Maxima der Häufigkeitsverteilung angibt. In einem Schritt 546 wird z.B. eine Abmessung (Winkel) der Zellen in Azimutrichtung basierend auf einer Anzahl von Punktgruppen je lokalem Maximum bestimmt. Der Wert für den Abstand, $\Delta\varphi$, kann direkt aus der eines Peaks bestimmt werden, da diese Höhe der Anzahl der Punkte mit einem bestimmten Wert von $\theta$ entspricht. In der Praxis führen nicht alle Messungen zu einem Punkt in der Punktwolke, und daher sollte $\Delta\varphi$ vorzugsweise anhand der maximalen Anzahl an Punkten in einem einzelnen Laserring bestimmt werden, z.B. gemäß

$$\Delta\varphi = \frac{360°}{M}$$

wobei M die Anzahl von Punkten je lokalem Maximum der Häufigkeitsverteilung angibt. In der Praxis führt die Multiplikation beider Parameter mit dem Faktor 2 (oder auch einem Faktor größer als 2) zu robusteren Ergebnissen. Dadurch wird im Wesentlichen sichergestellt, dass sichtbare und verdeckte Punkte in ähnlichen Zellen landen, anstatt dass jeder seine eigene Zelle erhält und nicht gefiltert wird. Es versteht sich, dass auch andere Werte bzw. Faktoren zur Multiplikation verwendet werden können. Auch können diese Abstände basierend auf einer Entfernung des vorgegebenen Betrachtungspunktes von einem Ursprung des Ursprungskoordinatensystems angepasst oder vorgegeben werden.

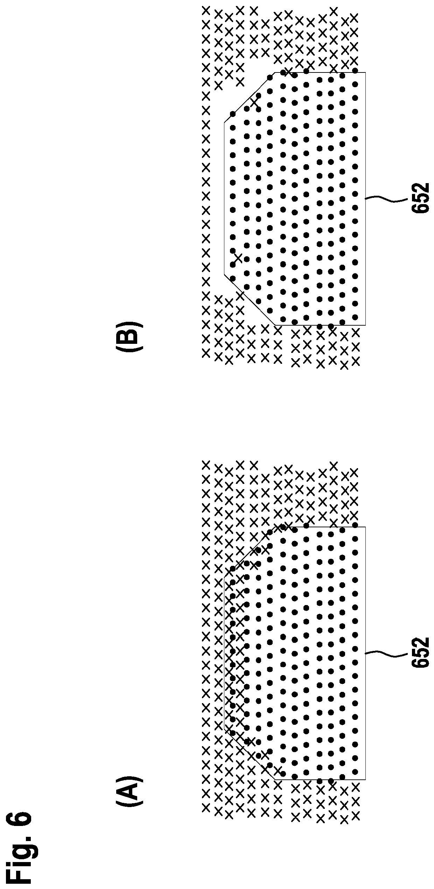

In Figur 6 sind beispielhaft Darstellungen für vor und nach der Anwendung eines vorgeschlagenen Verfahrens dargestellt. Hierzu ist links (Ansicht A bzw. Figur 6A) eine Objektkontur 652 eingezeichnet, und zwar aus Sicht der Kamera des Geräts, z.B. entlang der Achse x' gemäß Figur 2. Anders als in Figur 2 dort soll hier der Lidar-Sensor etwas höher angeordnet sein als die Kamera, also sozusagen über das Objekt besser hinwegsehen können.

Mit Kugeln (Pünktchen) sind hierbei Punkte, die auf dem Objekt liegen gekennzeichnet, mit Kreuzen hingegen Punkte die hinter dem Objekt liegen. Beide Arten von Punkten sind vom Lidar-Sensor erfasst, die unterschiedliche Darstellung soll hier nur der Erläuterung dienen. Hierbei ist zu sehen, dass bei einer Transformation der Punkte des Lidar-Sensors in das Koordinatensystem der Kamera (wie in Figur 6A) Punkte, die eigentlich hinter dem Objekt liegen, auf das Objekt projiziert werden.

Rechts (Ansicht B bzw. Figur 6B) ist die Objektkontur 652 auch eingezeichnet, dort sind aber bestimmte Punkte gemäß einem erfindungsgemäßen Verfahren in bevorzugter Ausführungsform entfernt. Dabei ist zu sehen, dass fast alle Punkte, die hinter dem Objekt liegen und zuvor auf das Objekt abgebildet wurden, jetzt nicht mehr vorhanden sind. Es sei erwähnt, dass die Objektkontur 652 hier nur zur Veranschaulichung eingezeichnet ist, dem Algorithmus, wie er zum Entfernen der Punkte verwendet wird, ist diese nicht bekannt.

## Patentansprüche

1. Verfahren zum Bestimmen einer Zielmenge von Punktgruppen in einer Umgebung (150), die von einem vorgegebenen Betrachtungspunkt (214) in der Umgebung (150) aus sichtbar oder nicht sichtbar sind, aus einer Menge von Punktgruppen, wobei eine Punktgruppe einen oder mehrere Punkte (P, A, B) umfasst, zur Navigation für ein sich zumindest teilweise automatisiert bewegendes Fahrzeug, umfassend:

   Bereitstellen (502) der Menge (503) von Punktgruppen in der Umgebung, mit Koordinaten in einem Ursprungskoordinatensystem (200),
   Transformieren (504) der Koordinaten der Menge (503) von Punktgruppen in Kugelkoordinaten in einem Zielkoordinatensystem (300), wobei der Betrachtungspunkt (214) in der Umgebung im Ursprung (302) des Zielkoordinatensystems (300) liegt,
   Bestimmen (506) eines sphärisch gekrümmten Gitternetzes (310) in Kugelkoordinaten in dem Zielkoordinatensystem (300), wobei das Gitternetz (310) Gitternetzpunkte und/oder Zellen (308) umfasst,

Zuordnen (508) einer jeden Punktgruppe von zumindest einem Teil der Menge zu einer Zelle (308) oder einem Gitternetzpunkt, anhand der Kugelkoordinaten,

für jede von zumindest einem Teil von Zellen (308) des Gitternetzes oder für jeden von zumindest einem Teil von Gitternetzpunkten des Gitternetzes, denen mehr als eine Punktgruppe zugeordnet ist: Bestimmen eines minimalen ($r_0$) und/oder maximalen Abstands, basierend auf Abständen der Punktgruppen vom Ursprung (302) des Zielkoordinatensystems (300),

a) Bestimmen einer Zielmenge (529) von Punktgruppen, die von einem vorgegebenen Betrachtungspunkt (214) in der Umgebung aus sichtbar sind, umfassend diejenigen Punktgruppen, deren Abstand vom Ursprung des Zielkoordinatensystems je Zelle oder Gitternetzpunkt den der Zelle oder dem Gitternetzpunkt zugeordneten minimalen ($r_0$) Abstand höchstens um einen vorgegebenen ersten Schwellwert ($\Delta r$) überschreitet, und/oder deren Abstand vom Ursprung des Zielkoordinatensystems je Zelle oder Gitternetzpunkt den maximalen Abstand abzüglich eines vorgegebenen zweiten Schwellwerts unterschreitet, sowie insbesondere umfassend auch diejenigen Punktgruppen, die Zellen oder Gitternetzpunkten zugeordnet sind, denen nur eine Punktgruppe zugeordnet ist, und/oder

b) Bestimmen einer Zielmenge von Punktgruppen, die von einem vorgegebenen Betrachtungspunkt (302) in der Umgebung aus nicht sichtbar sind, umfassend diejenigen Punktgruppen, deren Abstand vom Ursprung des Zielkoordinatensystems (300) je Zelle oder Gitternetzpunkt den minimalen Abstand ($r_0$) um mehr als den vorgegebenen ersten Schwellwert ($\Delta r$) überschreitet, und/oder deren Abstand vom Ursprung des Zielkoordinatensystems je Zelle oder Gitternetzpunkt den maximalen Abstand abzüglich des vorgegebenen zweiten Schwellwerts überschreitet, und

Bereitstellen (528) der Zielmenge (529) oder der Zielmengen von Punktgruppen, und insbesondere Verwendung zur Navigation und/oder Bewegen des sich zumindest teilweise automatisiert bewegendes Fahrzeugs.

2. Verfahren nach Anspruch 1, wobei der jeweilige vorgegebene erste ($\Delta r$) und/oder zweite Schwellwert von dem jeweiligen minimalen ($r_0$) oder maximalen Abstand abhängt, insbesondere dem jeweiligen minimalen oder maximalen Abstand multipliziert mit einem jeweiligen Faktor entspricht.

3. Verfahren nach Anspruch 1 oder 2, wobei das Bestimmen (506) des Gitternetzes (310) in Kugelkoordinaten in dem Zielkoordinatensystem umfasst:

Bestimmen (540) oder Verwenden der Koordinaten der Menge von Punktgruppen in dem Ursprungskoordinatensystem in Kugelkoordinaten,
Bestimmen (542) einer Häufigkeitsverteilung der Punktgruppen in Polarrichtung,
Bestimmen (544) einer Abmessung ($\Delta\theta$) der Zellen oder von Abständen der Gitternetzpunkte in Polarrichtung basierend auf einer Anzahl lokaler Maxima der Häufigkeitsverteilung, und
Bestimmen (546) einer Abmessung ($\Delta\varphi$) der Zellen oder der Abstände der Gitternetzpunkte in Azimutrichtung basierend auf einer Anzahl von Punktgruppen je lokalem Maximum.

4. Verfahren nach einem der vorstehenden Ansprüche, wobei eine Abmessung ($\Delta\theta$) der Zellen (308) oder Abstände der Gitternetzpunkte in Polarrichtung und/oder eine Abmessung ($\Delta\varphi$) der Zellen (308) oder Abstände der Gitternetzpunkte in Azimutrichtung basierend auf einer Entfernung des vorgegebenen Betrachtungspunktes (302) von einem Ursprung (202) des Ursprungskoordinatensystems bestimmt wird.

5. Verfahren nach einem der vorstehenden Ansprüche, wobei die Menge von Punktgruppen in der Umgebung mittels Entfernungsmessung, insbesondere mittels eines Lidar-Sensors (110), bestimmt wird oder worden ist.

6. Verfahren nach Anspruch 5, wobei ein Ausgangspunkt der Entfernungsmessung, insbesondere eine Position des Lidar-Sensors, in einem Ursprung (202) des Ursprungskoordinatensystems (200) liegt.

7. Verfahren nach einem der vorstehenden Ansprüche, weiterhin umfassend:

Bereitstellen (532) von Umgebungsinformationen (533), mit Koordinaten in dem Zielkoordinatensystem, und
Assoziieren (534) von zumindest einem Teil der Punktgruppen der Zielmenge (529) von Punktgruppen, die von einem vorgegebenen Betrachtungspunkt in der Umgebung aus sichtbar, mit den Umgebungsinformationen (533).

8. Verfahren nach Anspruch 7, wobei die Umgebungsinformationen (533) Bildinformationen und/oder semantische Informationen umfassen, und insbesondere mittels eines Bildsensors (120) bestimmt werden oder worden sind.

9. Verfahren nach Anspruch 8, wobei die Umgebungsinformationen (533) aus Sicht des vorgegebenen Betrachtungspunktes (214) dargestellt sind, und wobei insbesondere eine Position des Bildsensors in dem Ursprung (302) des Zielkoordinatensystems liegt.

10. Verfahren nach einem der Ansprüche 7 bis 9, weiterhin umfassend:

Bestimmen von Steuerungsinformationen zum Bewegen eines Geräts (100), basierend auf den Umgebungsinformationen (533) und den damit assoziierten Punktgruppen der Zielmenge (529), und
Bereitstellen der Steuerungsinformationen und insbesondere Ansteuern des Geräts (100) basierend auf den Steuerungsinformationen.

11. System (106, 130) zur Datenverarbeitung, umfassend Mittel zur Ausführung des Verfahrens nach einem der vorstehenden Ansprüche.

12. Gerät (100), das eingerichtet ist, eine Menge (503) von Punktgruppen in einer Umgebung, mit Koordinaten in einem Ursprungskoordinatensystem, bereitzustellen, und bevorzugt Umgebungsinformationen (533) mit Koordinaten in einem Zielkoordinatensystem bereitzustellen,

wobei das Gerät weiter eingerichtet ist, eine Zielmenge (529) von Punktgruppen, die von einem vorgegebenen Betrachtungspunkt in der Umgebung aus sichtbar oder nicht sichtbar sind, die gemäß einem Verfahren nach einem der Ansprüche 1 bis 10 aus der Menge von Punkten bestimmt worden ist, zu erhalten, und insbesondere zur Navigation zu verwenden, bevorzugt mit einem Entfernungsmessungs- oder Lidar-Sensor (110) zum Erfassen der Punktgruppen in der Umgebung, weiter bevorzugt mit einem Sensor, insbesondere Bildsensor (120), zum Erfassen von Umgebungsinformationen, weiter bevorzugt mit einer Steuer- und/oder Regeleinheit (104) und einer Antriebseinheit (102) zum Bewegen des Geräts (100), und weiter bevorzugt mit einem System (106) nach Anspruch 11.

13. Gerät (100) nach Anspruch 12, das als sich zumindest teilweise automatisiert bewegendes Fahrzeug, insbesondere als Personenbeförderungsfahrzeug oder als Güterbeförderungsfahrzeug, und/oder als Roboter, insbesondere als Haushaltsroboter, z.B.

Saug- und/oder Wischroboter, Boden- oder Straßenreinigungsgerät oder Rasenmähroboter, und/oder als Drohne ausgebildet ist.

14. Computerprogramm, umfassend Befehle, die bei der Ausführung des Programms durch einen Computer diesen veranlassen, die Verfahrensschritte eines Verfahrens nach einem der Ansprüche 1 bis 10 durchzuführen, wenn es auf der Recheneinheit ausgeführt wird.

15. Computerlesbares Speichermedium, auf dem das Computerprogramm nach Anspruch 14 gespeichert ist.

**Claims**

1. Method for determining a target set of point groups in an environment (150), which are visible or not visible from a predefined viewing point (214) in the environment (150), from a set of point groups, wherein a point group comprises one or more points (P, A, B), for navigation for a vehicle moving in an at least partially automated manner, comprising:

providing (502) the set (503) of point groups in the environment, with coordinates in an origin coordinate system (200),
transforming (504) the coordinates of the set (503) of point groups into spherical coordinates in a target coordinate system (300), wherein the viewing point (214) in the environment is at the origin (302) of the target coordinate system (300),
determining (506) a spherically curved grid (310) in spherical coordinates in the target coordinate system (300), wherein the grid (310) comprises grid points and/or cells (308),
assigning (508) each point group of at least one portion of the set to a cell (308) or a grid point using the spherical coordinates,
for each of at least one portion of cells (308) of the grid or for each of at least one portion of grid points of the grid that have been assigned more than one point group: determining a minimum $(r_0)$ and/or maximum spacing based on spacings of the point groups from the origin (302) of the target coordinate system (300),

a) determining a target set (529) of point groups, which are visible from a predefined viewing point (214) in the environment, comprising those point groups whose spacing from the origin of the target coordinate system per cell or grid point exceeds the minimum $(r_0)$ spacing assigned to the cell or grid point at most by a predefined first

threshold value ($\Delta r$) and/or whose spacing from the origin of the target coordinate system per cell or grid point falls below the maximum spacing minus a predefined second threshold value, and in particular also comprising those point groups which are assigned cells or grid points which are assigned only one point group, and/or

b) determining a target set of point groups, which are not visible from a predefined viewing point (302) in the environment, comprising those point groups whose spacing from the origin of the target coordinate system (300) per cell or grid point exceeds the minimum ($r_0$) spacing by more than the predefined first threshold value ($\Delta r$), and/or whose spacing from the origin of the target coordinate system per cell or grid point falls below the maximum spacing minus the predefined second threshold value, and

    providing (528) the target set (529) or the target sets of point groups, and in particular use for navigating and/or moving the vehicle moving in an at least partially automated manner.

2. Method according to Claim 1, wherein the respective predefined first ($\Delta r$) and/or second threshold value depends on the respective minimum ($r_0$) or maximum spacing, in particular corresponds to the respective minimum or maximum spacing multiplied by a respective factor.

3. Method according to Claim 1 or 2, wherein the determination (506) of the grid (310) in spherical coordinates in the target coordinate system comprises:

    determining (540) or using the coordinates of the set of point groups in the origin coordinate system in spherical coordinates,
    determining (542) a frequency distribution of the point groups in the polar direction,
    determining (544) a dimension ($\Delta\theta$) of the cells or spacings of grid points in the polar direction based on a number of local maxima of the frequency distribution, and
    determining (546) a dimension ($\Delta\varphi$) of cells or the spacings of the grid points in the azimuth direction based on a number of point groups per local maximum.

4. Method according to one of the preceding claims, wherein a dimension ($\Delta\theta$) of the cells (308) or spacings of the grid points in the polar direction and/or a dimension ($\Delta\varphi$) of the cells (308) or spacings of the grid points in the azimuth direction is/are determined based on a distance of the predefined viewing point (302) from an origin (202) of the origin coordinate system.

5. Method according to one of the preceding claims, wherein the set of point groups in the environment is determined or has been determined by means of a distance measurement, in particular by means of a lidar sensor (110).

6. Method according to Claim 5, wherein a starting point of the distance measurement, in particular a position of the lidar sensor, is at an origin (202) of the origin coordinate system (200).

7. Method according to one of the preceding claims, furthermore comprising:

    providing (532) environmental information (533), with coordinates in the target coordinate system, and
    associating (534) at least one portion of the point groups in the target set (529) of point groups, which are visible from a predefined viewing point in the environment, with the environmental information (533).

8. Method according to Claim 7, wherein the environmental information (533) comprises image information and/or semantic information, and in particular is or has been determined by means of an image sensor (120).

9. Method according to Claim 8, wherein the environmental information (533) is presented from the point of view of the predefined viewing point (214), and wherein in particular a position of the image sensor is at the origin (302) of the target coordinate system.

10. Method according to one of Claims 7 to 9, furthermore comprising:

    determining control information for moving a device (100) based on the environmental information (533) and the associated point groups in the target set (529), and
    providing the control information and, in particular, controlling the device (100) based on the control information.

11. Data processing system (106, 130) comprising means for carrying out the method according to one of the preceding claims.

12. Device (100), which is configured to provide a set (503) of point groups in an environment, with coordinates in an origin coordinate system, and preferably to provide environmental information (533) with coordinates in a target coordinate system,

wherein the device is further configured to obtain a target set (529) of point groups, which are visible or not visible from a predefined viewing point in the environment, which has been determined from the set of points according to a method according to one of Claims 1 to 10, and to use it in particular for navigation, preferably having a distance measurement or lidar sensor (110) for capturing the point groups in the environment, further preferably having a sensor, in particular an image sensor (120), for capturing environmental information, further preferably having a control and/or regulating unit (104) and a drive unit (102) for moving the device (100), and further preferably having a system (106) according to Claim 11.

13. Device (100) according to Claim 12, which is designed as a vehicle moving in an at least partially automated manner, in particular as a passenger transport vehicle or as a goods transport vehicle, and/or as a robot, in particular as a household robot, e.g. a robotic vacuum cleaner and/or a robotic mop, floor or road cleaning device or robotic lawnmower, and/or as a drone.

14. Computer program comprising instructions which, when the program is executed by a computer, cause the latter to carry out the method steps of a method according to one of Claims 1 to 10 when it is executed on the computing unit.

15. Computer-readable storage medium on which the computer program according to Claim 14 is stored.

**Revendications**

1. Procédé de détermination d'une quantité cible de groupes de points dans un environnement (150), qui sont visibles ou non à partir d'un point d'observation (214) spécifié dans l'environnement (150), à partir d'une quantité de groupes de points, un groupe de points comprenant un ou plusieurs points (P, A, B), pour la navigation d'un véhicule se déplaçant au moins en partie de manière automatisée, comprenant :

fourniture (502) de la quantité (503) de groupes de points dans l'environnement, avec des coordonnées dans un système de coordonnées d'origine (200),
transformation (504) des coordonnées de la quantité (503) de groupes de points en coordonnées sphériques dans un système de coordonnées cible (300), le point d'observation (214) dans l'environnement se trouvant à l'origine (302) du système de coordonnées cible (300),

détermination (506) d'un réseau quadrillé (310) à courbure sphérique en coordonnées sphériques dans le système de coordonnées cible (300), le réseau quadrillé (310) comprenant des points de réseau quadrillé et/ou des cellules (308),
association (508) de chaque groupe de points d'au moins une partie de la quantité à une cellule (308) ou à un point de réseau quadrillé à l'aide des coordonnées sphériques,
pour chacune d'au moins une partie de cellules (308) du réseau quadrillé ou pour chacun d'au moins une partie de points de réseau quadrillé, auxquels plus d'un groupe de points est associé : détermination d'une distance minimale $(r_0)$ et/ou maximale sur la base de distances des groupes de points par rapport à l'origine (302) du système de coordonnées cible (300),

a) détermination d'une quantité cible (529) de groupes de points, qui sont visibles à partir d'un point d'observation (214) spécifié dans l'environnement, comprenant ces groupes de points, dont la distance par rapport à l'origine du système de coordonnées cible par cellule ou point de réseau quadrillé dépasse la distance minimale $(r_0)$ associée à la cellule ou au point de réseau quadrillé au maximum d'une première valeur de seuil $(\Delta r)$ spécifiée et/ou dont la distance par rapport à l'origine du système de coordonnées cible par cellule ou point de réseau quadrillé ne dépasse pas la distance maximale moins une deuxième valeur de seuil spécifiée, et comprenant en particulier également ces groupes de points, qui sont associés à des cellules ou des points de réseau quadrillé, auxquels un seul groupe de points est associé, et/ou
b) détermination d'une quantité cible de groupes de points qui ne sont pas visibles à partir d'un point d'observation (302) spécifié dans l'environnement, comprenant ces groupes de points, dont la distance par rapport à l'origine du système de coordonnées cible (300) par cellule ou point de réseau quadrillé dépasse la distance minimale $(r_0)$ de plus de la première valeur de seuil $(\Delta r)$ spécifiée et/ou dont la distance par rapport à l'origine du système de coordonnées cible par cellule ou point de réseau quadrillé dépasse la distance maximale moins la deuxième valeur de seuil spécifiée, et

fourniture (528) de la quantité cible (529) ou des quantités cibles de groupes de points, et en particulier utilisation pour la navigation et/ou le déplacement du véhicule se déplaçant au moins en partie de manière automatisée.

2. Procédé selon la revendication 1, la première ($\Delta r$) et/ou la deuxième valeur de seuil spécifiée respective dépendant de la distance minimale ($r_0$) ou maximale respective, en particulier correspondant à la distance minimale ou maximale respective multipliée par un facteur respectif.

3. Procédé selon la revendication 1 ou 2, la détermination (506) du réseau quadrillé (310) en coordonnées sphériques dans le système de coordonnées cible comprenant :

   détermination (540) ou utilisation des coordonnées de la quantité de groupes de points dans le système de coordonnées d'origine en coordonnées sphériques,
   détermination (542) d'une distribution de fréquence des groupes de points dans la direction polaire,
   détermination (544) d'une dimension ($\Delta\theta$) des cellules ou des distances des points de réseau quadrillé dans la direction polaire sur la base d'un nombre de maxima locaux de la distribution de fréquence, et
   détermination (546) d'une dimension ($\Delta\varphi$) des cellules ou des distances des points de réseau quadrillé dans la direction azimutale sur la base d'un nombre de groupes de points par maximum local.

4. Procédé selon l'une des revendications précédentes, une dimension ($\Delta\theta$) des cellules (308) ou des distances des points de réseau quadrillé dans la direction polaire et/ou une dimension ($\Delta\varphi$) des cellules (308) ou des distances des points de réseau quadrillé dans la direction azimutale étant déterminées sur la base d'un éloignement du point d'observation (302) spécifié par rapport à une origine (202) du système de coordonnées d'origine.

5. Procédé selon l'une des revendications précédentes, la quantité de groupes de points dans l'environnement étant ou ayant été déterminée au moyen d'une mesure d'éloignement, en particulier au moyen d'un capteur lidar (110).

6. Procédé selon la revendication 5, un point de départ de la mesure d'éloignement, en particulier une position du capteur lidar, se trouvant dans une origine (202) du système de coordonnées d'origine (200).

7. Procédé selon l'une des revendications précédentes, comprenant par ailleurs :

   fourniture (532) d'informations d'environnement (533) avec des coordonnées dans le système de coordonnées cible, et
   association (534) d'au moins une partie des groupes de points de la quantité cible (529) de groupes de points, qui sont visibles à partir d'un point d'observation spécifié dans l'environnement, avec les informations d'environnement (533).

8. Procédé selon la revendication 7, les informations d'environnement (533) comprenant des informations d'image et/ou des informations sémantiques et étant ou ayant été déterminées en particulier au moyen d'un capteur d'image (120).

9. Procédé selon la revendication 8, les informations d'environnement (533) étant représentées du point de vue du point d'observation (214) spécifié, et une position du capteur d'image en particulier se trouvant à l'origine (302) du système de coordonnées de cible.

10. Procédé selon l'une des revendications 7 à 9, comprenant par ailleurs :

    détermination d'informations de commande pour déplacer un appareil (100) sur la base des informations d'environnement (533) et des groupes de points de la quantité cible (529) qui leur sont associés, et
    fourniture des informations de commande et, en particulier, pilotage de l'appareil (100) sur la base des informations de commande.

11. Système (106, 130) de traitement de données, comprenant des moyens pour exécuter le procédé selon l'une des revendications précédentes.

12. Appareil (100), qui est mis au point pour fournir une quantité (503) de groupes de points dans un environnement avec des coordonnées dans un système de coordonnées d'origine, et pour fournir de manière préférée des informations d'environnement (533) avec des coordonnées dans un système de coordonnées cible.

    l'appareil étant en outre mis au point pour obtenir une quantité cible (529) de groupes de points, qui sont visibles ou non à partir d'un point d'observation spécifié dans l'environnement, qui a été déterminé à partir de la quantité de points selon un procédé selon l'une des revendications 1 à 10, et pour l'utiliser en particulier pour la navigation,
    de manière préférée avec un capteur de mesure d'éloignement ou un capteur lidar (110) pour détecter des groupes de points dans l'environnement, de manière davantage préférée avec un capteur, en particulier un capteur d'image (120), pour détecter des informations d'environnement, de manière davantage préférée avec une unité de commande et/ou de régulation (104) et une unité d'entraînement (102) pour déplacer l'appareil (100), et de manière davantage préférée avec un système (106) selon la revendication 11.

13. Appareil (100) selon la revendication 12, qui est formé comme un véhicule se déplaçant au moins en partie de manière automatisée, en particulier comme un véhicule de transport de personnes ou comme un véhicule de transport de marchandises, et/ou comme un robot, en particulier comme un robot ménager, par exemple un robot d'aspiration et/ou de balayage, un appareil de nettoyage des sols ou des rues ou un robot de tonte de gazon, et/ou comme un drone.

14. Programme informatique comprenant des instructions qui, lorsque le programme est exécuté par un ordinateur, amènent celui-ci à mettre en œuvre les étapes d'un procédé selon l'une des revendications 1 à 10 lorsqu'il est exécuté sur l'unité de calcul.

15. Support de stockage lisible par ordinateur, sur lequel est stocké le programme informatique selon la revendication 14.

**Fig. 1**

**Fig. 2**

# Fig. 3

# Fig. 4

# Fig. 5

Fig. 6

(A)

652

(B)

652

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019197711 A1
- US 2020018852 A1

**In der Beschreibung aufgeführte Nicht-Patentliteratur**

- **VON S. KATZ et al.** Hidden Point Removal. *ACM Transactions on Graphics*, July 2007, vol. 26 (3), 24
- **VON VECHERSKY et al.** Colourising Point Clouds Using Independent Cameras. *IEEE Robotics and Automation Letters*, October 2018, vol. 3 (4), 3575-3582